# EUROPÄISCHE PATENTANMELDUNG

(11) **EP 2 557 042 A1**
(43) Veröffentlichungstag der Anmeldung: **13.02.2013**
(21) Anmeldenummer: 12005762.5
(22) Anmeldetag: 08.08.2012
(51) Int. Cl.: B65B 7/16, B65B 31/02, B65B 51/14, B29C 65/18

(54) **Siegelstation und Verfahren für deren Betrieb**

(30) Priorität: 12.08.2011 DE 102011110407
(71) Anmelder: Multivac Sepp Haggenmüller GmbH & Co. KG, 87787 Wolfertschwenden (DE)
(72) Erfinder: Jokele, Bernd, 87435 Kempten (DE)
(74) Vertreter: Grünecker, Kinkeldey, Stockmair & Schwanhäusser

(57) **Zusammenfassung**

Die Erfindung bezieht sich auf eine Siegelstation (2) für eine Verpackungsmaschine (1) zum Siegeln einer Folie (11) auf eine Verpackungsschale (9), mit einem Siegelwerkzeug (5), wobei das Siegelwerkzeug (5) dazu konfiguriert ist, eine Siegelkraft zum Siegeln auf die Folie (11) und die Verpackungsschale (9) aufzubringen. Die Siegelstation (2) zeichnet sich dadurch aus, dass das Siegelwerkzeug (5) eine obere und eine untere Schalenaufnahme (12, 14) umfasst, die in unterschiedlichen Höhen angeordnet und jeweils zur Aufnahme mindestens einer Verpackungsschale (9) konfiguriert sind.

## Beschreibung

Die Erfindung bezieht sich auf eine Siegelstation für eine Verpackungsmaschine gemäß dem Oberbegriff des Anspruchs 1, auf eine Verpackungsmaschine mit den Merkmalen des Anspruchs 10 sowie auf ein Verfahren gemäß dem Oberbegriff des Anspruchs 11.

Eine Verpackungsmaschine mit einer Siegelstation geht beispielsweise aus der DE 102 37 933 A1 hervor. Die Siegelstation umfasst ein Siegelwerkzeug, das mittels Druck eine Deckelfolie auf eine Verpackungsschale, auch als Tray bezeichnet, siegelt. Üblicherweise sind mehrere Verpackungsschalen horizontal nebeneinander und in mehreren Reihen angeordnet. Der für das Siegeln aufzubringende Druck sinkt dabei mit der steigenden Anzahl horizontal angeordneter Verpackungsschalen, da sich die Siegelkraft auf eine größere Fläche verteilt. Nachteilig daran ist, dass die Qualität der Siegelnaht mit sinkendem Siegeldruck nachlässt.

Eine weitere Verpackungsmaschine, die jedoch nicht für das Siegeln von Verpackungsschalen mithilfe einer Siegelkraft bzw. eines Siegeldrucks, sondern als Kammermaschine für das Vakuumverpacken eingerichtet ist, ist in der US 2005/0178090 A1 beschrieben. Darin sind mehrere einzelne Vakuumkammern übereinander angeordnet und dazu konfiguriert, Gegenstände unabhängig voneinander unter Vakuum zu verpacken. Nachteilig daran ist, dass diese Anordnung keine Verpackungsschalen versiegeln kann.

Aufgabe der vorliegenden Erfindung ist es, eine Siegelstation für eine Verpackungsmaschine zur Verfügung zu stellen, die es mit konstruktiv möglichst einfachen Mitteln erlaubt, eine möglichst hohe Anzahl von Verpackungsschalen zu siegeln.

Diese Aufgabe wird gelöst durch eine Siegelstation mit den Merkmalen des Anspruchs 1 bzw. durch eine Verpackungsmaschine mit den Merkmalen des Anspruchs 10. Die Erfindung gibt ferner auch ein Verfahren zum Betrieb einer solchen Siegelstation an. Vorteilhafte Weiterbildungen der Erfindung sind in den Unteransprüchen angegeben.

Die erfindungsgemäße Siegelstation für eine Verpackungsmaschine ist zum Siegeln einer Folie auf eine Verpackungsschale mit einem Siegelwerkzeug konfiguriert. Das Siegelwerkzeug bringt eine Siegelkraft zum Siegeln auf die Folie und die Verpackungsschale auf und zeichnet sich dadurch aus, dass das Siegelwerkzeug eine obere und eine untere Schalenaufnahme umfasst, die in unterschiedlichen Höhen angeordnet und jeweils zur Aufnahme mindestens einer Verpackungsschale konfiguriert sind. Vorteilhaft daran ist, dass es die Ausgestaltung des Siegelwerkzeugs erlaubt, eine Anzahl von Verpackungsschalen in unterschiedlichen Höhen bzw. übereinander anzuordnen. Dadurch kann eine gegenüber der horizontalen Anordnung von Verpackungsschalen gleichbleibende Anzahl von Verpackungsschalen im Siegelwerkzeug aufgenommen werden, ohne dass der Siegeldruck abnimmt. Vielmehr ist es durch eine übereinander liegende Anordnung der Verpackungsschalen möglich, die Wirkfläche der Siegelkraft zu reduzieren und dadurch den Siegeldruck zu erhöhen. Dies bewirkt eine höhere Qualität der Siegelnaht. Das Siegelwerkzeug lässt es aber auch zu, dass die Kapazität des Siegelwerkzeugs bei gleichbleibender Siegelkraft gegenüber der horizontalen Anordnung der Verpackungsschalen nahezu verdoppelt oder allgemein vervielfacht wird, ohne dass der Siegeldruck geringer wird.

Um die Kapazität der Siegelstation pro Arbeitstakt zu maximieren, kann es vorteilhaft sein, wenn das Siegelwerkzeug dazu konfiguriert ist, die Siegelkraft gleichzeitig auf eine in der oberen Schalenaufnahme aufgenommene Verpackungsschale und eine in der unteren Schalenaufnahme aufgenommene Verpackungsschale aufzubringen. Dadurch kann das Versiegeln gleichzeitig mit mehreren Verpackungsschalen durchgeführt werden.

In einer besonders vorteilhaften Variante der Erfindung umfasst das Siegelwerkzeug eine obere Siegelplatte und eine untere Siegelplatte. Diese Anordnung ermöglicht ein einfaches und effektives Aufbringen der Siegelkraft auf das Siegelwerkzeug bzw. auf die Verpackungsschale.

Für eine Parallelisierung von Arbeitsschritten innerhalb der Siegelstation kann es vorteilhaft sein, wenn die obere Schalenaufnahme und die untere Siegelplatte gekoppelt bewegbar sind. Damit kann beispielsweise erreicht werden, dass die obere Schalenaufnahme verschlossen wird, während gleichzeitig die untere Schalenaufnahme geöffnet wird.

Für ein an die jeweilige Situation angepasstes Aufbringen der Siegelkraft kann es vorteilhaft sein, wenn eine Vorrichtung zum Erfassen der Siegelkraft und zum Regeln der Siegelkraft auf einen bestimmten Wert vorgesehen ist. So kann je nach Beschaffenheit der Folie oder der Verpackungsschale ein individueller Siegeldruck aufgebracht werden. Auch das Regeln der Siegelkraft in Abhängigkeit der Temperatur im Siegelwerkzeug ist möglich.

Für das Verpacken von verderblichen Lebensmitteln ist es vorteilhaft, wenn das Siegelwerkzeug dazu konfiguriert ist, die Verpackungsschale zu evakuieren.

Eine vorteilhafte Ausführungsvariante der Erfindung sieht vor, dass die obere und die untere Schalenaufnahme mit einem Hubwerk bewegbar sind. Dies erlaubt eine Höhenverstellung der Schalenaufnahme und gewährleistet eine räumliche Flexibilität.

Für das effektive Beladen der oberen und unteren Schalenaufnahme kann es vorteilhaft sein, wenn für die Siegelstation ein Greifersystem vorgesehen ist. Idealerweise ermöglicht es das Greifersystem, dass die obere und die untere Schalenaufnahme jeweils unabhängig voneinander beladen werden können.

Die Erfindung bezieht sich auch auf eine Verpackungsmaschine mit einer Siegelstation der vorstehend beschriebenen Art. Diese Verpackungsmaschine hat den Vorteil, dass die für das Versiegeln notwendige Siegelkraft gleichzeitig auf die untere und auf die obere Schalenaufnahme aufgebracht werden kann bzw. dass mehrere Verpackungsschalen gleichzeitig in übereinander angeordneten Ebenen versiegelt werden können.

Die Erfindung bezieht sich auch auf ein Verfahren zum Betrieb einer Siegelstation der vorstehend beschriebenen Art. Das Verfahren zeichnet sich dadurch aus, dass eine Siegelkraft gleichzeitig auf wenigstens eine in einer oberen Schalenaufnahme und wenigstens eine in einer unteren Schalenaufnahme befindliche Verpackungsschale aufgebracht wird. Dies hat den Vorteil, dass mehrere Verpackungsschalen gleichzeitig mit einem Siegelwerkzeug in einer Siegelstation versiegelt werden können. Somit können Verpackungsschalen, die sonst horizontal in mehreren Spuren angeordnet wären, übereinander angeordnet werden, sodass sich durch Reduzierung der Siegelfläche bei gleichbleibender Siegelkraft ein höherer Siegeldruck innerhalb des Siegelwerkzeugs ergibt. Es ist auch möglich, die Aufnahmekapazität des Siegelwerkzeugs gegenüber horizontal in gleicher Anzahl angeordneten Verpackungsschalen durch Verdoppelung der Schalenaufnahmen zu erhöhen und zugleich den Siegeldruck beizubehalten.

Besonders vorteilhaft ist es, wenn dem Siegelwerkzeug in einer zweiten Ebene Verpackungsschalen zugeführt werden, nachdem eine erste Ebene des Siegelwerkzeugs Verpackungsschalen aufgenommen hat. Damit können mehrere Arbeitstakte parallelisiert werden.

Eine besonders vorteilhafte Variante des Verfahrens sieht vor, dass die erste und die zweite Ebene des Siegelwerkzeugs einzeln evakuiert werden können. Somit kann das Evakuieren in voneinander unabhängigen Arbeitsschritten durchgeführt werden.

Im Folgenden werden vorteilhafte Ausführungsbeispiele der Erfindung anhand einer Zeichnung näher erläutert. Im Einzelnen zeigen:
- Figur 1: einen schematischen Ausschnitt einer Verpackungsmaschine mit einer erfindungsgemäßen Siegelstation in der Seitenansicht,
- Figur 2: einen schematischen Ausschnitt einer Verpackungsmaschine mit einer erfindungsgemäßen Siegelstation in teilweise geöffneten Zustand in der Seitenansicht,
- Figur 3: einen schematischen Ausschnitt einer Verpackungsmaschine mit einer erfindungsgemäßen Siegelstation in einen anderen teilweise geöffneten Zustand in der Seitenansicht,
- Figur 4: einen schematischen Ausschnitt einer Verpackungsmaschine mit einer erfindungsgemäßen Siegelstation während des Siegelns, und
- Figur 5: einen schematischen Ausschnitt einer Verpackungsmaschine in Transportrichtung.

Gleiche Komponenten sind in den Figuren durchgängig mit gleichen Bezugszeichen versehen.

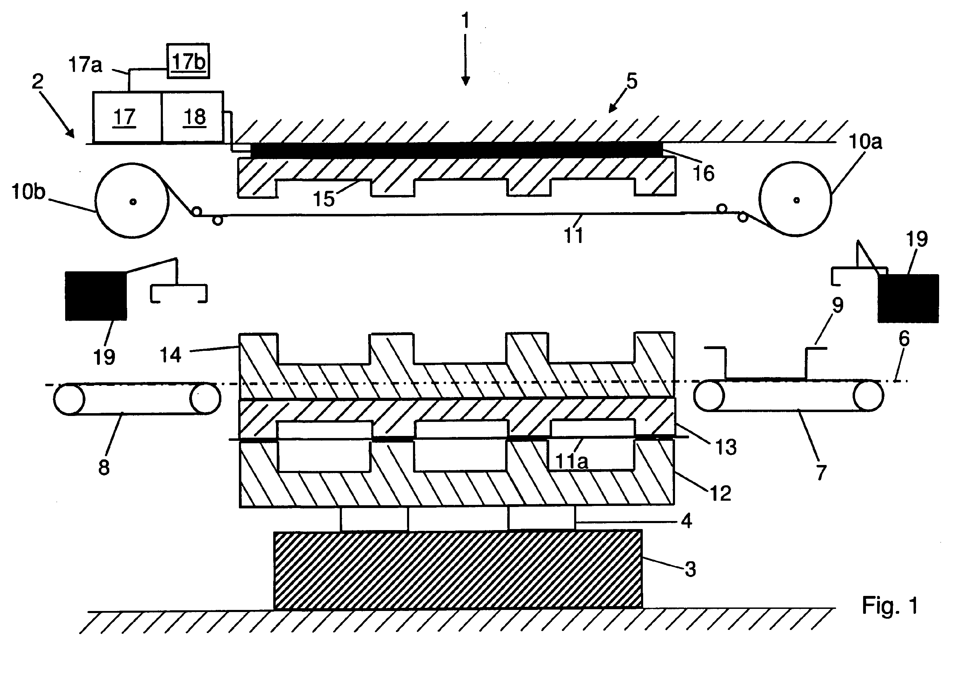

Figur 1 zeigt einen schematischen Ausschnitt einer Verpackungsmaschine 1. Es handelt sich hierbei um eine Schalenschließmaschine (Traysealer), die dazu dient, Gegenstände in vorgefertigte Schalen (Trays) zu verpacken.

Der gezeigte Ausschnitt der Verpackungsmaschine 1 verfügt über eine erfindungsgemäße Siegelstation 2. Die Siegelstation 2 ist auf einem Maschinengestell 3 angeordnet, das ein Hubwerk 4 umfasst. Auf dem Hubwerk 4 ist ein Siegelwerkzeug 5 beweglich angebracht. Das Hubwerk 4 ist dazu konfiguriert, das Siegelwerkzeug 5 in einer zum Maschinengestell 3 senkrechten Richtung zu bewegen.

Die Verpackungsmaschine 1 umfasst eine Transportebene 6, in der eine Zuführvorrichtung 7 und eine Abführvorrichtung 8 zum Transport von Verpackungsschalen (Trays) 9 angeordnet sind. Die Zuführvorrichtung 7 und die Abführrichtung 8 sind in diesem Ausführungsbeispiel jeweils Bandförderanlagen. Die Zuführvorrichtung 7 ist dazu vorgesehen, der Siegelstation 2 unversiegelte Verpackungsschalen 9 zuzuführen, die Abführvorrichtung 8 ist dazu vorgesehen, versiegelte Verpackungsschalen 9 abzutransportieren.

Die Siegelstation 2 weist weiter auf einer Seite des Siegelwerkzeugs 5 eine als Rolle ausgeführte Abwickelvorrichtung 10a für eine Folie 11 auf, die in diesem Ausführungsbeispiel eine abwickelbare Folienbahn ist. Die Abwickelvorrichtung 10a ist dazu konfiguriert, dem Siegelwerkzeug 5 steuerbar die Folie 11 zuzuführen. Auf der gegenüberliegenden Seite des Siegelwerkzeugs ist eine Aufwickelvorrichtung 10b vorgesehen, um mit der Abwickelvorrichtung 10a zusammenzuwirken und die Folie 11 aufzuwickeln.

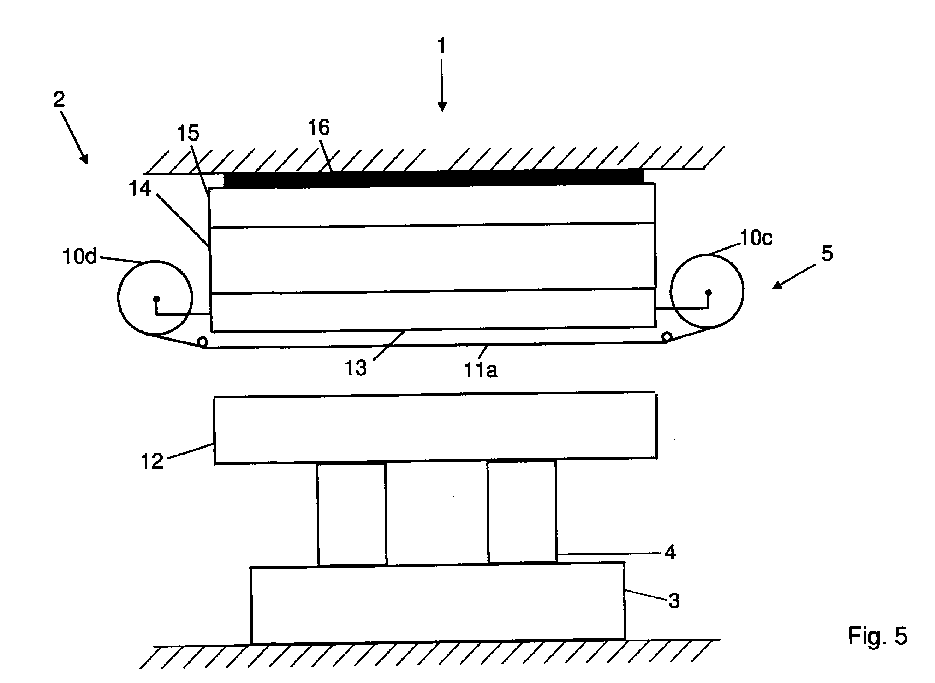

Figur 5 zeigt einen Ausschnitt der Verpackungsmaschine 1 in der Transportrichtung. Wie darin dargestellt, ist eine weitere Abwickelvorrichtung 10c vorgesehen, die mit einer Aufwickelvorrichtung 10d zusammenwirkt, um eine weitere bahnförmige Folie 11a ab- bzw. aufzuwickeln. Die Abwickelvorrichtung 10c und die Aufwickelvorrichtung 10d sind in Transportrichtung auf der linken bzw. der rechten Seite des Siegelwerkzeugs 5 angeordnet. Das heißt, dass die Abwickelvorrichtungen 10a und 10c um 90° zueinander versetzt an der Siegelstation 2 angeordnet sind. Damit ist es möglich, dass die zwei als Bahnen ausgeführten Folien 11, 11a gleichzeitig und unabhängig voneinander dem Siegelwerkzeug 5 zugeführt werden können.

Wie in Figur 1 gezeigt, umfasst das Siegelwerkzeug 5 weiter eine untere Schalenaufnahme 12, die mit einer unteren Siegelplatte 13 zusammenwirkt, um eine Siegelkraft auf die Verpackungsschale 9 und die Folie 11 aufzubringen. An die untere Siegelplatte 13 sind die Abwickelvorrichtung 10a und die Aufwickelvorrichtung 10b gekoppelt. Oberhalb der unteren Siegelplatte 13 weist das Siegelwerkzeug 5 eine obere Schalenaufnahme 14 auf, die mit der unteren Siegelplatte 13 koppelbar ist. Die obere Schalenaufnahme 14 wirkt mit einer oberen Siegelplatte 15 zusammen. Die untere Siegelplatte 13 ist so in das Siegelwerkzeug 5 integriert, dass sie sich von der unteren Schalenaufnahme 12 ablösen lässt. Die obere Schalenaufnahme 14 und die untere Siegelplatte 13 sind an die obere Siegelplatte 15 koppelbar. Die untere Schalenaufnahme 12 und die obere Schalenaufnahme 14 können jeweils mehrere Verpackungsschalen 9 aufnehmen. In diesem Beispiel können die untere Schalenaufnahme 12 und die obere Schalenaufnahme 14 jeweils drei Verpackungsschalen 9 in einer Reihe aufnehmen. Die untere Schalenaufnahme 12 und die untere Siegelplatte 13 bzw. die obere Schalenaufnahme 14 und die obere Siegelplatte 15 bilden jeweils eine Baugruppe innerhalb des Siegelwerkzeugs 5, die dazu konfiguriert sind, die Verpackungsschalen 9 zu evakuieren und/oder zu begasen.

Oberhalb des Siegelwerkzeugs 5 verfügt die Siegelstation 2 über eine steuerbare Kraftvorrichtung 16, die hier eine aufblasbare Membrane ist. An die Kraftvorrichtung 16 ist die obere Siegelplatte 15 gekoppelt, beispielsweise mittels einer als Führung funktionierenden Bolzenverbindung. Die Kraftvorrichtung 16 ist dafür vorgesehen, die zum Siegeln der Verpackungsschale 9 aufzubringende Siegelkraft auf das Siegelwerkzeug 5 zu erzeugen. Dafür sind die untere Schalenaufnahme 12 und die untere Siegelplatte 13 bzw. die obere Schalenaufnahme 14 und die obere Siegelplatte 15 jeweils konstruktiv so ausgeführt, dass sie die Siegelkraft jeweils auf die zwischen der Schalenaufnahme 12, 14 und der Siegelplatte 13, 15 angeordneten Verpackungsschale 9 und die auf der Verpackungsschale 9 überlappend angeordnete Folie 11 übertragen.

Für die Steuerung der Kraftvorrichtung 16 und das Hubwerk 4 ist eine Steuereinrichtung 17 vorgesehen, die über eine elektrische Leitung 17a an der Kraftvorrichtung 16 angeschlossen ist. Die Steuereinrichtung 17 wirkt weiter mit einer Sensorik 17b zusammen, die beispielsweise die aktuelle Siegelkraft und/oder die Temperatur des Siegelwerkzeugs 5 erfasst. Die von der Sensorik 17b bereitgestellten Daten werden von der Steuereinrichtung 17 verarbeitet. Um die Kraftvorrichtung 16 gesteuert aufzublasen, verfügt die Siegelstation 2 weiter über einen Kompressor 18, der dazu konfiguriert ist, mit der Steuereinrichtung 17 zusammenzuarbeiten.

Um die untere Schalenaufnahme 12 und die obere Schalenaufnahme 14 zu be- und entladen, ist ein Greifersystem 19 vorgesehen. Das Greifersystem 19 ist dazu konfiguriert, gleichzeitig eine oder mehrere Verpackungsschalen 9 von der Zuführvorrichtung 7 aufzunehmen und in die untere Schalenaufnahme 12 und/oder die obere Schalenaufnahme 14 zu transportieren. Weiter kann das Greifersystem 19 Verpackungsschalen 9 aus dem Siegelwerkzeug 5 entnehmen und der Abführvorrichtung 8 zum Weitertransport übergeben. Um das Greifersystem 19 zu unterstützen, sind die Zuführvorrichtung 7 und die Abführvorrichtung 8 jeweils höhenverstellbar.

Der Betrieb der erfindungsgemäßen Siegelstation 2 wird nachfolgend anhand einiger Beispiele erläutert.

Die Verpackungsmaschine 1 und die darin integrierte Siegelstation 2 arbeiten taktweise.

Ausgehend von dem in Figur 1 gezeigten Anfangszustand der Siegelstation 2 werden zunächst so viele Verpackungsschalen 9 über die Zuführvorrichtung 7 bereitgestellt, wie von dem Siegelwerkzeug 5 aufgenommen werden können. In diesem Ausführungsbeispiel kann das Siegelwerkzeug 5 zweimal drei Verpackungsschalen 9 aufnehmen, nämlich drei Verpackungsschalen 9 in der unteren Schalenaufnahme 12 und weitere drei Verpackungsschalen in der oberen Schalenaufnahme 13.

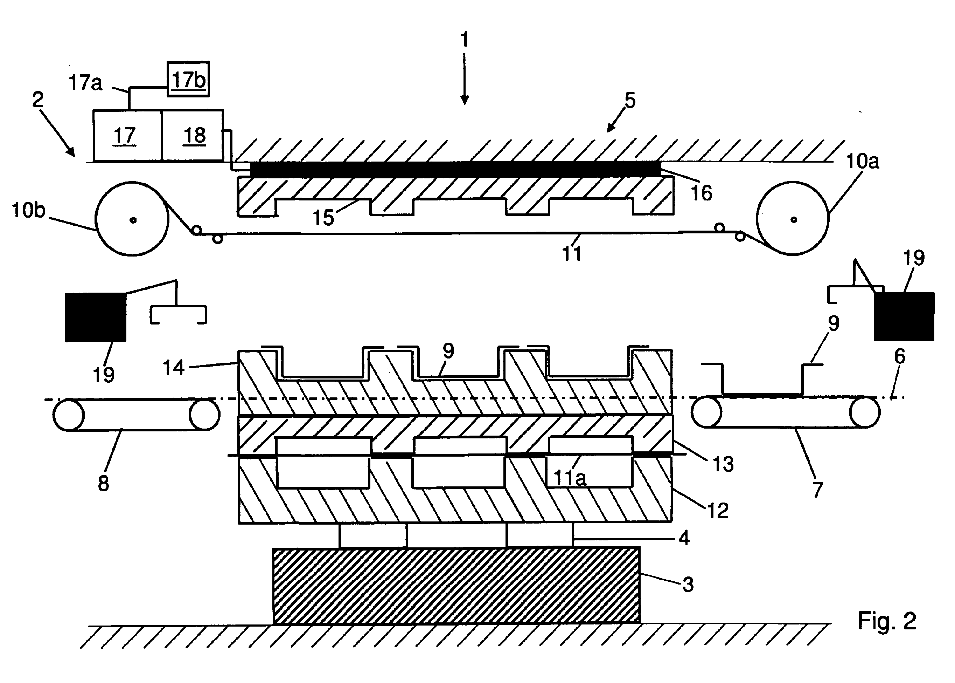

Figur 2 zeigt einen schematischen Ausschnitt der Verpackungsmaschine 1 mit der erfindungsgemäßen Siegelstation 2 in einem teilweise geöffneten Zustand. Die obere Schalenaufnahme 14 wird von der oberen Siegelplatte 15 entkoppelt und mittels des Hubewerks 4 abgesenkt. Der nun frei zugänglichen oberen Schalenaufnahme 14 wird mittels des Greifersystems 19 ein Satz der Verpackungsschalen 9 zugeführt, in diesem Beispiel drei Stück. Ebenso wird in den Zwischenraum zwischen oberer Schalenaufnahme 14 und oberer Siegelplatte 15 die Folie 11 mit Hilfe der Abwickelvorrichtung 10a eingebracht und auf der Gegenseite von der Aufwickelvorrichtung 10b aufgewickelt. Die Folie 11 kann hierfür entweder als zusammenhängende Folienbahn oder aber als einzelne Folienstücke in das Siegelwerkzeug 5 eingebracht werden.

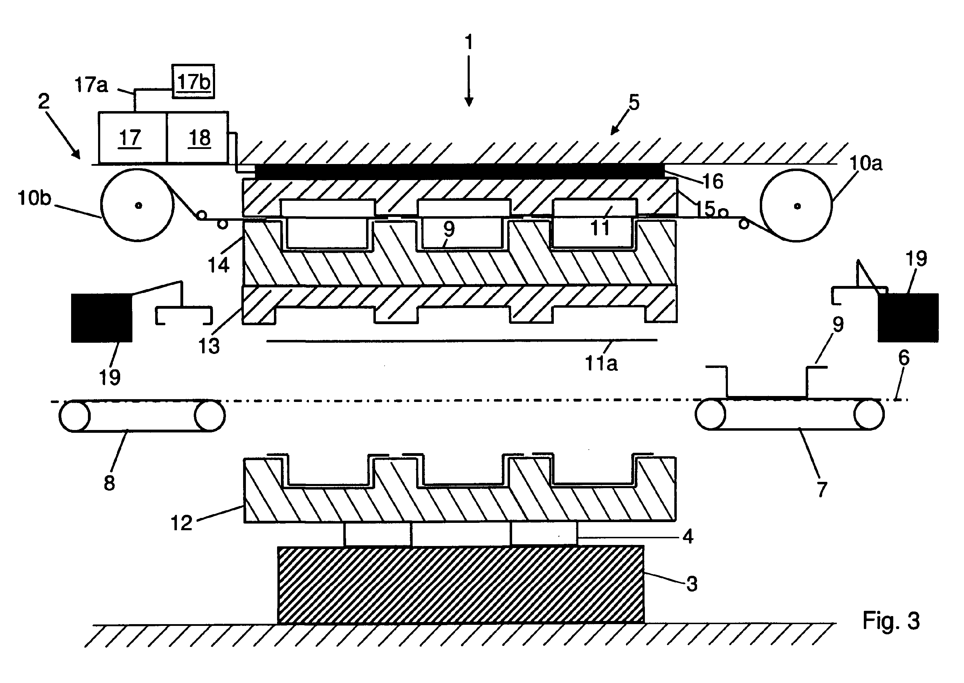

In Figur 3 ist die Verpackungsmaschine 1 als schematischer Ausschnitt mit der Siegelstation 2 in einem weiteren, teilweise geöffneten Zustand dargestellt. Nachdem, wie zuvor beschrieben, die obere Schalenaufnahme 14 mit Verpackungsschalen 9 befüllt wurde, wird nun die obere Schalenaufnahme 14 in Richtung der oberen Siegelplatte 15 bewegt und mit dieser gekoppelt, so dass die obere Schalenaufnahme 14 und die obere Siegelplatte 15 eine geschlossene Einheit bilden. Mitsamt der oberen Schalenaufnahme 14 wird nun die untere Siegelplatte 13 gekoppelt bewegt. Dadurch ergibt sich ein Freiraum zwischen der unteren Schalenaufnahme 12 und der unteren Siegelplatte 13, so dass die untere Schalenaufnahme 12 einen weiteren Satz von Verpackungsschalen 9 aufnehmen kann. Mittels des Greifersystems 19 wird die untere Schalenaufnahme 12 mit den Verpackungsschalen 9 befüllt. Die Abwickelvorrichtung 10c führt dem Freiraum zwischen unterer Schalenaufnahme 12 und unterer Siegelplatte 13 die Folie 11a zu. Auf der gegenüberliegenden Seite wird die Folie 11a von der Aufwickelvorrichtung 10d aufgewickelt.

Gleichzeitig mit dem Beladen der unteren Schalenaufnahme 12 bzw. nach dem Schließen der oberen Schalenaufnahme 14 werden die Verpackungsschalen 9, die in der oberen Schalenaufnahme 14 angeordnet sind, evakuiert.

Nach dem Befüllen der unteren Schalenaufnahme 12 wird das Siegelwerkzeug 5 verschlossen, indem das Hubwerk 4 die untere Schalenaufnahme 12 aufwärts in Richtung der unteren Siegelplatte 13 bewegt. Die untere Schalenaufnahme 12 und die untere Siegelplatte 13 werden aneinander gekoppelt. Anschließend werden die Verpackungsschalen 9 der unteren Schalenaufnahme 12 evakuiert.

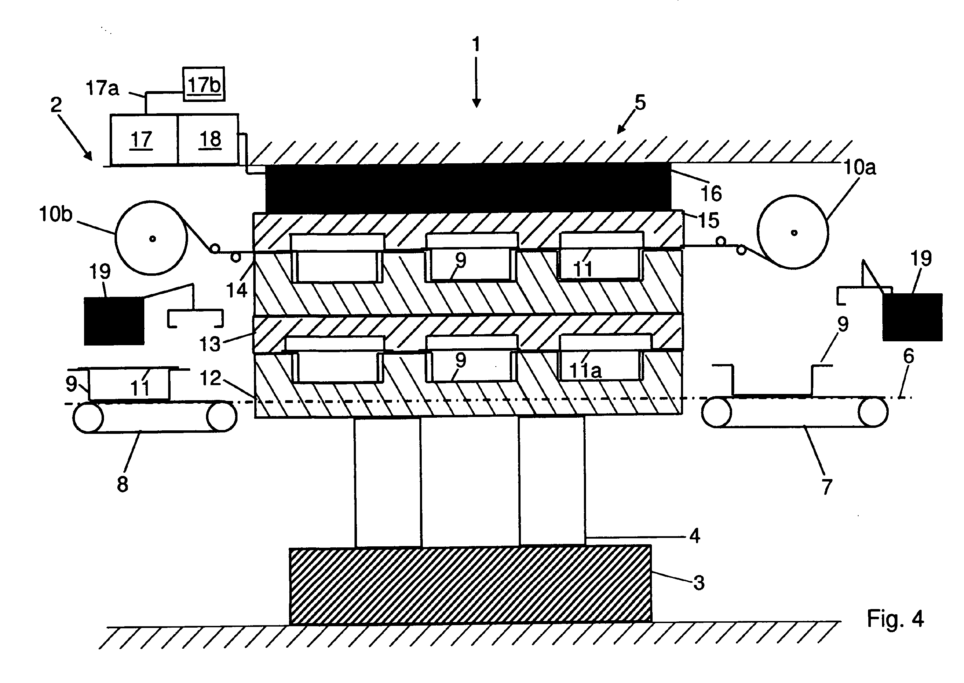

In Figur 4 ist ein Ausschnitt der Verpackungsmaschine 1 mit der erfindungsgemäßen Siegelstation 2 während des Siegelns dargestellt. Nachdem sowohl die obere Schalenaufnahme 14 als auch die untere Schalenaufnahme 12 jeweils mit einem Satz der Verpackungsschalen 9 bestückt sowie die Folie 11 zugeführt und die Verpackungsschalen 9 evakuiert wurden, wird das Siegelwerkzeug 5 nun mit Hilfe des Hubwerks 4 in Richtung der steuerbaren Kraftvorrichtung 16 angehoben. Die Kraftvorrichtung 16, bei dem es sich wie oben beschrieben um eine steuerbare und aufblasbare Membrane handelt, bringt nun die in Abhängigkeit von Parametern, wie beispielsweise der Temperatur im Siegelwerkzeug 5 oder der Beschaffenheit der Verpackungsschale 9 und Folie 11, eingestellte Siegelkraft auf die obere Siegelplatte 15 auf. Die Siegelkraft wird über die obere Schalenaufnahme 14 auf die daran gekoppelte untere Siegelplatte 13 übertragen, sodass beide Sätze von Verpackungsschalen 9 mit den beiden Sätzen von Folien 11 gleichzeitig versiegelt werden.

Nach dem Versiegeln wird die Verbindung zwischen der oberen Schalenaufnahme 14 und der oberen Siegelplatte 15 getrennt und durch Absenken des Hubwerks 4 das Siegelwerkzeug 5 geöffnet, so dass mittels des Greifersystems 19 die mit der Folie 11 versiegelten Verpackungsschalen 9 aus der oberen Schalenaufnahme 14 entfernt werden können. Die versiegelten Verpackungsschalen 9 werden mit Hilfe der Abführvorrichtung 8 entweder einer nächsten Arbeitstation (nicht gezeigt) der Verpackungsmaschine 1 zugeführt oder als fertiges Produkt aus der Verpackungsmaschine 1 abgeführt.

Ein neuer Satz Verpackungsschalen 9, der über die Zuführvorrichtung 7 bereitgestellt wird, wird mittels des Greifersystems 19 in die Schalenaufnahme 14 eingebracht. Über die Abwickelvorrichtung 10a wird ein weiterer Satz der Folie 11 ebenso zwischen die obere Schalenaufnahme 14 und die obere Siegelplatte 15 eingebracht. Anschließend wird das Siegelwerkzeug 5 erneut verschlossen, indem sich das Hubwerk 4 erneut in Richtung Kraftvorrichtung 16 bewegt. Die untere Schalenaufnahme 12 wird von der unteren Siegelplatte 13 entkoppelt, sodass sich das Hubwerk 4 alleine mit der unteren Schalenaufnahme 12 abwärts bewegt. Somit öffnet sich das Siegelwerkzeug 5 zwischen der unteren Schalenaufnahme 12 und der unteren Siegelplatte 13, so dass der mit der Folie 11 versiegelte Satz von Verpackungsschalen 9 aus der unteren Schalenaufnahme 12 mit Hilfe des Greifersystems 19 entfernt werden kann. Über die Abführvorrichtung 8 werden die versiegelten Verpackungsschalen 9 weiter- bzw. abtransportiert.

Ausgehend von den dargestellten Ausführungsbeispielen können die Verpackungsmaschine 1 und die erfindungsgemäße Siegelstation 2 in vielfacher Hinsicht abgewandelt werden. Beispielsweise können die untere und die obere Schalenaufnahme 12, 14 jeweils dazu konfiguriert sein, mehrere Spuren von Verpackungsschalen 9 gleichzeitig aufzunehmen, so dass beispielsweise zweimal drei Spuren von Verpackungsschalen in jeder der Schalenaufnahmen 12, 14 angeordnet sind. So ist es möglich, dass pro Arbeitstakt mehrere Verpackungsschalen 9 versiegelt werden.

Weiter wäre es denkbar, dass weitere Schalenaufnahmen zusätzlich zu den Schalenaufnahmen 12, 14 vorgesehen werden, die entsprechend übereinander angeordnet sind. Somit könnte die Aufnahmekapazität der Siegelstation 2 zusätzlich gesteigert werden.

## Patentansprüche

1. Siegelstation (2) für eine Verpackungsmaschine (1) zum Siegeln einer Folie (11) auf eine Verpackungsschale (9), mit einem Siegelwerkzeug (5), wobei das Siegelwerkzeug (5) dazu konfiguriert ist, eine Siegelkraft zum Siegeln auf die Folie (11) und die Verpackungsschale (9) aufzubringen, **dadurch gekennzeichnet, dass** das Siegelwerkzeug (5) eine obere und eine untere Schalenaufnahme (14, 12) umfasst, die in unterschiedlichen Höhen angeordnet und jeweils zur Aufnahme mindestens einer Verpackungsschale (9) konfiguriert sind.

2. Siegelstation nach Anspruch 1, **dadurch gekennzeichnet, dass** das Siegelwerkzeug dazu konfiguriert ist, die Siegelkraft gleichzeitig auf eine in der oberen Schalenaufnahme (14) aufgenommene Verpackungsschale (9) und eine in der unteren Schalenaufnahme (12) aufgenommene Verpackungsschale (9) aufzubringen.

3. Siegelstation nach Anspruch 1 oder 2, **dadurch gekennzeichnet, dass** das Siegelwerkzeug (5) eine obere Siegelplatte (15) und eine untere Siegelplatte (13) umfasst.

4. Siegelstation nach Anspruch 3, **dadurch gekennzeichnet, dass** die obere Schalenaufnahme (14) und die untere Siegelplatte (13) gekoppelt bewegbar sind.

5. Siegelstation nach einem der vorangehenden Ansprüche, **dadurch gekennzeichnet, dass** eine steuerbare Kraftvorrichtung (16) vorgesehen ist, um die Siegelkraft aufzubringen.

6. Siegelstation nach einem der vorangehenden Ansprüche, **dadurch gekennzeichnet, dass** eine Vorrichtung (17) zum Erfassen der Siegelkraft und zum Regeln der Siegelkraft auf einen bestimmten Wert vorgesehen ist.

7. Siegelstation nach einem der vorangehenden Ansprüche, **dadurch gekennzeichnet, dass** das Siegelwerkzeug (5) dazu konfiguriert ist, die Verpackungsschale (9) zu evakuieren und/oder zu begasen.

8. Siegelstation nach einem der vorangehenden Ansprüche, **dadurch gekennzeichnet, dass** die obere und die untere Schalenaufnahme (14, 12) mit einem Hubwerk (4) bewegbar sind.

9. Siegelstation nach einem der vorangehenden Ansprüche, **dadurch gekennzeichnet, dass** für die Siegelstation (2) ein Greifersystem (19) vorgesehen ist.

10. Verpackungsmaschine (1) mit einer Siegelstation (2) nach einem der Ansprüche 1 bis 9.

11. Verfahren zum Betrieb einer Siegelstation (1), **dadurch gekennzeichnet, dass** eine Siegelkraft gleichzeitig auf wenigstens eine in einer oberen Schalenaufnahme (14) und wenigstens eine in einer unteren Schalenaufnahme (12) befindliche Verpackungsschale (9) aufgebracht wird.

12. Verfahren nach Anspruch 11, **dadurch gekennzeichnet, dass** einem Siegelwerkzeug (5) in einer zweiten Ebene Verpackungsschalen (9) zugeführt werden, nachdem eine erste Ebene des Siegelwerkzeugs (5) Verpackungsschalen (9) aufgenommen hat.

13. Verfahren nach Anspruch 12, **dadurch gekennzeichnet, dass** die erste und die zweite Ebene des Siegelwerkzeugs (5) einzeln evakuiert werden und/oder zu begasen.
